# FASCICULE DE BREVET EUROPEEN

(11) **EP 0 870 147 B1**
(45) Date de publication et mention de la délivrance du brevet: **09.01.2002**
(21) Numéro de dépôt: 96937388.5
(22) Date de dépôt: 04.11.1996
(51) Int. Cl.: F16L 37/084

(54) **CONNECTEUR RAPIDE A VERROUILLAGE**
SCHNELLVERBINDUNG MIT VERRIEGELUNG
FAST LOCKING CONNECTOR

(30) Priorité: 24.09.1996 FR 9611598
(43) Date de publication de la demande: 14.10.1998
(73) Titulaire: LEGRIS S.A., F-35000 Rennes (FR)
(72) Inventeur: MUSELLEC, Jean-Noel, F-35200 Rennes (FR)
(74) Mandataire: Robert, Jean-Pierre
(86) Numéro de dépôt international: FR9601728
(87) Numéro de publication internationale: WO9813639

(56) Documents cités:
- EP-A- 0 200 561
- DE-U- 1 961 831
- FR-A- 2 429 370
- FR-A- 2 705 430

## Description

La présente invention concerne un connecteur rapide comportant une partie mâle et une partie femelle qui s'accouplent par simple introduction de l'une dans l'autre.

Dans des circuits traversés par des fluides sous pression et qui mettent en oeuvre des connecteurs rapides, il est souhaitable, voire exigé, de mettre en oeuvre des moyens de verrouillage positifs de la connexion. En effet, une connexion mâle réalisée est tout d'abord une source de fuites et un risque de désaccouplement dont la conséquence la plus bénigne est de mettre en panne la machine comportant ces circuits de fluide sous pression, et si cette machine est une automobile, d'être une source d'accidents (absence de pression dans les circuits hydrauliques de freinage, fuite de carburant à l'intérieur du compartiment moteur pouvant conduire à un incendie...).

Il existe de nombreux dispositifs de verrouillage de l'élément mâle dans l'élément femelle d'un connecteur rapide. Ils fonctionnent sensiblement tous sur le même principe et mettent en oeuvre un moyen général identique consistant en un organe de clavetage qui s'interpose entre une surface radiale de l'embout (gorge ou collerette) et une surface radiale de l'élément femelle (gorge ou collerette également). Cet organe de clavetage peut être introduit manuellement ou peut être maintenu dans sa position de verrouillage par un organe élastique de rappel à l'encontre de l'effet duquel il peut être placé dans un état escamoté (soit déplacé soit déformé) lors de l'introduction de l'embout.

Dans un mode de réalisation particulièrement simple de ce dispositif, le verrou est constitué par une bague montée à coulissement radial dans un logement ménagé dans la pièce femelle du connecteur, entre une première position de repos et de verrouillage où elle est excentrée par rapport à l'axe de l'alésage de la pièce femelle et une seconde position escamotée où elle est sensiblement coaxiale avec cet alésage.

Un organe élastique constitué par deux languettes en une seule pièce avec la bague, est interposé entre la bague et la pièce et tend à rappeler la bague dans sa première position.

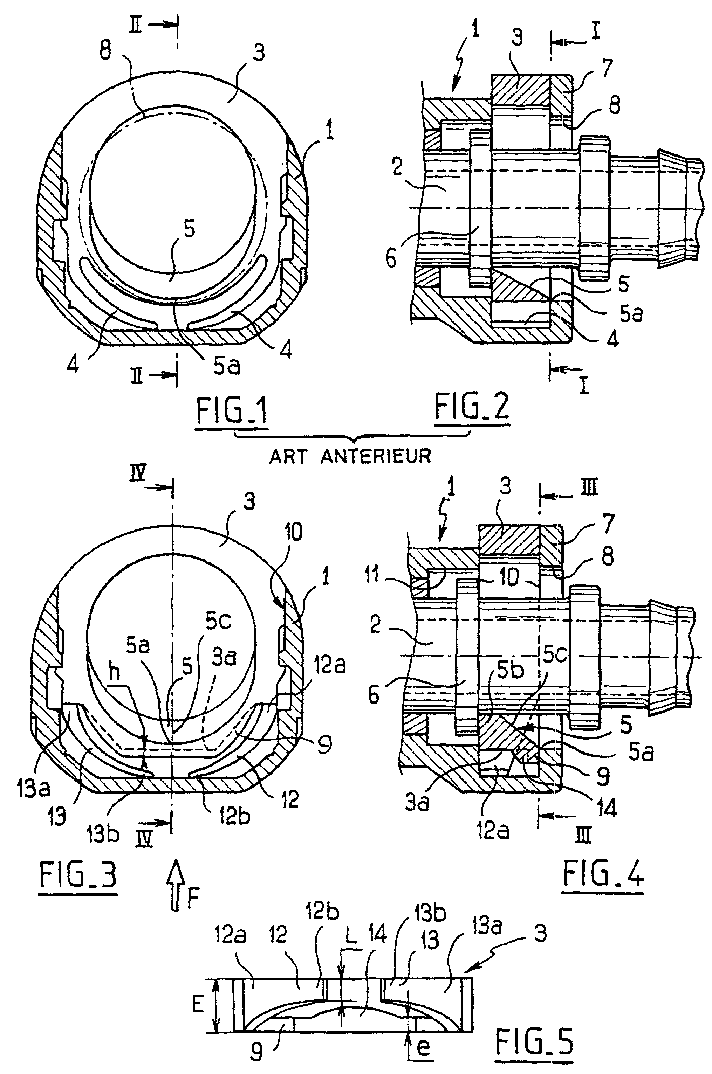

Une telle bague est représentée dans un connecteur aux figures 1 et 2. Les dessins illustrent bien la relative faiblesse d'une pièce à résister correctement à un effort d'arrachement important. En effet, dans le connecteur représenté, la pièce femelle 1 comporte un verrou pour empêcher l'extraction de l'embout 2 lorsqu'il est introduit correctement dans la pièce femelle 1. Ce verrou est constitué par une bague 3 qui peut coulisser radialement dans la pièce femelle 1, dans un logement ouvert, réalisé dans celle-ci et qui comporte deux languettes élastiques extérieures 4 qui tendent à désaxer l'alésage intérieur de la bague 3 par rapport à l'alésage de la pièce femelle 1. La partie de cet alésage intérieur de la bague 3 située d'un côté des languettes 4 est en forme de surface (par exemple cylindrique) 5 d'axe incliné par rapport à l'axe de la bague, de sorte qu'au passage de la collerette 6 de l'embout 2, cette surface forme rampe pour désaligner les axes de l'alésage de la bague 3 et de l'alésage de la pièce 1. La bague 3 peut alors se déplacer à l'encontre de l'effet des languettes élastiques 4 jusqu'à ce que la collerette 6 soit logée dans la pièce 1 au-delà de cette bague 3. Les languettes 4 sont alors décomprimées et la bague se retrouve en position libre excentrée par rapport à l'alésage de la pièce femelle et l'un de ses flancs prend contact avec le flanc arrière de la collerette 6 et constitue une butée s'opposant à l'extraction de l'embout 2, puisque cette bague est arrêtée axialement par la cloison frontale 7 de la pièce femelle qui possède un orifice 8 d'introduction de l'embout mâle. On constate à l'examen des figures que, en partie inférieure, il y a peu de matière de la bague logée derrière cette cloison 7. Il s'agit essentiellement des languettes 4, car la bague 3 offre très peu de surface de contact avec la cloison 7 au point 5a le plus bas de la rampe 5. Si l'effort d'extraction est important, la partie inférieure de la bague peut donc se déformer en pénétrant dans l'orifice 8 alors que les pattes sont bloquées derrière la cloison 7. Cette déformation peut être irréversible et aboutir à une détérioration complète du verrou. Augmenter, sous la rampe 5, l'épaisseur de la paroi de la bague 3 pour bénéficier d'une surface de contact plus importante, demande de modifier complètement les dimensions de la pièce femelle 1 en augmentant son encombrement extérieur pour conserver la même amplitude de débattement élastique des languettes 4.

Par la présente invention, on se propose de résoudre ce problème en offrant une solution par laquelle on améliore l'appui axial de la bague contre la paroi 7 d'entrée de la pièce femelle sans avoir à augmenter l'encombrement extérieur de celle-ci.

A cet effet l'invention a donc pour objet un connecteur rapide comportant une pièce femelle avec un alésage, une pièce mâle avec une collerette extérieure susceptible d'être introduite dans l'alésage, une bague de verrouillage montée à coulissement radial dans un logement de la pièce femelle qui divise l'alésage en une section d'entrée et une section principale, la bague étant mobile entre une première position où elle est excentrée par rapport à l'alésage et une seconde position où elle est sensiblement coaxiale à l'alésage et comportant, en une seule pièce sous forme d'au moins une languette, un organe élastique coopérant avec le logement pour rappeler la bague dans sa première position. Selon la revendication 1 la bague comporte du côté de la section d'entrée de l'alésage un plateau d'appui débordant du côté de la languette, laquelle languette étant de largeur mesurée parallèlement à l'axe du connecteur inférieur à l'épaisseur de la bague diminuée de l'épaisseur du plateau mesurées selon cette même direction axiale.

Ce plateau offre une surface d'appui de la bague contre la cloison 7 supérieure à celle qu'offre la bague selon l'art antérieur sans pour autant augmenter l'encombrement général du dispositif, là où les languettes élastiques peuvent être comprimées et s'effacer derrière le plateau qui porte cette surface.

Dans un mode préféré de réalisation, la bague comporte deux languettes symétriques par rapport à un plan médian radial et le plateau possède un renfort arrière entre les deux extrémités des languettes. On notera enfin que la hauteur radiale le long de l'axe médian des bords du plateau est sensiblement égale à l'épaisseur des languettes.

D'autres caractéristiques et avantages de l'invention ressortiront de la description donnée ci-après d'un mode de réalisation.

Il sera fait référence aux dessins annexés parmi lesquels :
- la figure 1 est une coupe selon le plan I-I de la figure 2 d'un connecteur rapide à verrouillage conforme à l'art antérieur,
- la figure 2 est une coupe selon le plan II-II de la figure 1,
- les figures 3 et 4 illustrent un mode de réalisation de l'invention par les coupes semblables à celles des figures 1 et 2,
- la figure 5 est une vue suivant F de la figure 3 de la bague seule mise en oeuvre dans le connecteur de l'invention.

On retrouve aux figures 3, 4 et 5 les éléments déjà décrits en regard des figures 1 et 2 avec les mêmes références. La bague 3 comporte, dans son mode de réalisation représenté aux figures 3 à 5, un plateau débordant 9 qui est situé au voisinage du point 5a le plus bas de la rampe 5 et du côté de la cloison 7 possédant l'orifice 8 d'introduction de l'élément mâle du connecteur dans la pièce femelle 1. Cette cloison 7 résulte de la présente du logement 10 ménagé transversalement dans la pièce femelle 1, qui est en intersection avec son alésage interne pour le diviser en deux parties à savoir l'ouverture 8 d'entrée de l'élément mâle et la section principale 11 dans laquelle est logée lorsque le connecteur est en service, la collerette 6 de l'élément mâle 2. La forme de ce logement 10 et sa coopération avec la bague 3 sont décrites dans le brevet FR-A-2.705.430 au nom de la demanderesse.

Ce plateau 9 vient donc, du côté de la cloison 7, en saillie au-delà de la surface extérieure 3a de la partie inférieure de la bague 3, notamment au voisinage du point 5a le plus bas de la rampe 5, pour offrir une surface augmentée d'appui et de coulissement de la bague dans cette zone contre la cloison 7. L'épaisseur e de ce plateau est très nettement inférieure à l'épaisseur totale de la bague 3 (dimensions mesurées axialement) de sorte que les languettes élastiques de la bague peuvent à l'état comprimé se loger derrière le plateau. Pour ce faire les languettes élastiques 12 et 13 du mode de réalisation selon l'invention ont une larguer décroissante depuis leur racine jusqu'à leur extrémité libre de sorte que leur largeur L à cette extrémité est inférieure à l'épaisseur E de la bague diminuée de l'épaisseur e du plateau 9. Dans un mode de réalisation non représenté, les languettes 12 et 13 pourraient être de largeur constante L.

Comme dans la réalisation selon l'art antérieur, la bague 3 possède deux languettes 12 et 13 élastiques symétriques l'une de l'autre par rapport à un plan médian radial de la bague (par exemple le plan de coupe IV-IV de la figure 3). L'extrémité des languettes 12 et 13 étant leur partie la plus étroite, elle peut être choisie de manière à permettre de pourvoir le plateau 9 au droit de ses extrémités d'une surépaisseur 14 de renfort arrière comme visible sur la figure 5. Cette surépaisseur 14 confère au plateau 9 au voisinage du point 5a, c'est-à-dire là où la concentration des contraintes est la plus importante lors d'un effort d'arrachement de l'embout 2, une meilleure capacité à résister à cet effort d'arrachement.

On notera par ailleurs que les languettes 12 et 13 (voir la figure 3) vont en s'amincissant (en épaisseur) depuis leur racine 12a, 13a jusqu'à leur extrémité libre 12b, 13b. Ainsi, lorsque ces languettes sont comprimées, c'est-à-dire lorsque la bague est repoussée vers le bas dans le logement 10, la partie la plus mince des languettes peut aisément se loger derrière le plateau 9 dont la hauteur h au voisinage du point 5a en saillie par rapport à la paroi 3a extérieure de la bague à ce niveau, peut être supérieure à cette épaisseur. Il résulte de cette disposition que, par rapport à l'art antérieur, on dispose d'un même débattement élastique de la bague 3 dans son logement 10 tout en ayant augmenté la dimension de la surface de cette bague 3 en butée contre la cloison 7.

On aura remarqué enfin sur la figure 4 que la rampe 5 est plus courte et plus inclinée que celle de l'art antérieur.

En effet, toujours dans le but de pouvoir résister à un effort d'extraction de l'embout important il a été prévu de renforcer l'épaisseur de la zone de la bague qui intercepte la collerette en position de verrouillage. Cette zone est celle 5b sur la figure 4. Elle a été obtenue par une augmentation de la pente de la rampe 5. Il faut noter à cet égard que le point le plus bas 5a de la rampe 5 est situé, dans la première position de la bague 3, au niveau de la partie inférieure de l'alésage 8 et qu'il ne peut le dépasser sans constituer un obstacle à la pénétration de la collerette 6. L'augmentation de l'épaisseur dans la zone 5b en respectant cette contrainte, toutes choses égales par ailleurs avec la bague de l'art antérieur, a engagé cette augmentation de la pente de la rampe. Cette rampe plus raide a pour effet, pour un effort d'introduction donné de la collerette 6, d'avoir une composante dirigée vers le bas, donc d'entraînement en effacement de la bague 3, plus faible que dans le mécanisme de l'art antérieur. Pour pallier cet inconvénient, il a été trouvé un profil de rampe particulier qui permet de minimiser les composantes axiales de l'effort de frottement résistant à la pénétration de la collerette. Ainsi la rampe 5 est-elle cylindrique, engendrée par une portion de cercle de diamètre égal à celui de la collerette perpendiculaire à l'axe de la bague 3 et déplacée parallèlement à elle-même le long de la droite 5c qui forme la trace de la rampe dans le plan de la figure 4.

## Revendications

1. Connecteur rapide comportant une pièce femelle (1) avec un alésage (8, 11), une pièce mâle (2) avec une collerette extérieure (6) susceptible d'être introduite dans l'alésage, une bague (3) de verrouillage montée à coulissement radial dans un logement (10) de la pièce femelle, qui divise l'alésage en une section d'entrée (8) et une section principale (11), la bague (3) étant mobile entre une première position où elle est excentrée par rapport à l'alésage et une seconde position où elle est sensiblement coaxiale à cet alésage et comportant, en une seule pièce, sous forme d'au moins une languette (12, 13) un organe élastique coopérant avec le logement (10) pour rappeler la bague (3) dans sa première position, **caractérisé en ce que** la bague (3) comporte du côté de la section d'entrée (8) de l'alésage, un plateau d'appui (9) débordant du côté de la languette (12, 13), laquelle languette, au moins à son extrémité libre, étant de largeur (L) mesurée parallèlement à l'axe du connecteur, inférieure à l'épaisseur (E) de la bague (3) diminuée de l'épaisseur (e) du plateau (9) mesurées selon cette même direction axiale.

2. Connecteur selon la revendication 1, **caractérisé en ce que** la bague (3) comporte deux languettes (12, 13) symétriques par rapport à un plan médian radial, et **en ce que** le plateau (9) possède un renfort arrière (14) entre les deux extrémités (12a, 13a) des languettes (12, 13).

3. Connecteur selon la revendication 2, **caractérisé en ce que** la hauteur radiale (h) le long de l'axe médian de la partie du plateau (9) en saillie par rapport à la bague est sensiblement égale à l'épaisseur de l'épaisseur de l'extrémité (12a, 13a) des languettes (12, 13).

4. Connecteur selon la revendication 1 **caractérisé en ce que**, pour déplacer la bague de sa seconde position vers sa première position au passage de la collerette (6), la bague (3) possède une rampe (5) coopérant avec la collerette (6) lors de l'introduction de l'embout (2) dans la pièce femelle (1), formée par une surface cylindrique engendrée par une portion de cercle de diamètre égal à celui de la collerette (6), perpendiculaire à l'axe de la bague et déplacée parallèlement à elle-même le long d'une génératrice (5c) inclinée par rapport à l'axe de la bague.

## Patentansprüche

1. Schnellverbinder umfassend ein aufnehmendes Element (1) mit einer Bohrung (8, 11), ein aufzunehmendes Element (2) mit einem Außenflansch (6), das dazu geeignet ist, in die Bohrung eingeführt zu werden, einen Feststellring (3), der radial gleitend in einer Aussparung (10) des aufnehmenden Elements angeordnet ist und die Bohrung in einen Eingangsabschnitt (8) und einen Hauptabschnitt (11) teilt, wobei der Ring (3) von einer ersten Stellung, in der er relativ zu der Bohrung exzentrisch angeordnet ist, in eine zweite Stellung, in der er im wesentlichen koaxial mit der Bohrung ist, bewegbar ist und einstückig mit einem elastischen Organ in Form zumindest einer Lasche (12, 13) ausgebildet ist, das mit der Aussparung (10) derart zusammenwirkt, daß der Ring (3) in seine erste Stellung zurückgeholt wird, **dadurch gekennzeichnet, daß** der Ring (3) auf der Seite des Eingangsabschnittes (8) der Bohrung eine Anlageplatte (9) hat, welche über den Rand der Lasche (12, 13) hinausragt, wobei die Lasche zumindest an ihrem freien Ende eine parallel zur Achse des Verbinders gemessene Breite (L) hat, die geringer ist als die Dicke (E) des Rings (3) abzüglich der entlang der gleichen Achsenrichtung gemessenen Dicke (e) der Platte (9).

2. Verbinder nach Anspruch 1, **dadurch gekennzeichnet, daß** der Ring (3) zwei Laschen (12, 13) hat, die relativ zu einer radialen Mittelebene symmetrisch sind und daß die Platte (9) eine vordere Verstärkung (14) zwischen den beiden Enden (12a, 13a) der Laschen (12, 13) hat.

3. Verbinder nach Anspruch 2, **dadurch gekennzeichnet, daß** die radiale Höhe (h) entlang der Mittelachse des überstehenden Bereichs der Platte (9) relativ zu dem Ring im wesentlichen gleich dem Ausmaß der Dicke der Enden (12a, 13a) der Laschen (12, 13) ist.

4. Verbinder nach Anspruch 1, **dadurch gekennzeichnet, daß** der Ring (3) zum Bewegen des Rings von seiner ersten Stellung in seine zweite Stellung an dem Flansch (6) vorbei eine Rampe (5) hat, die mit dem Flansch (6) beim Einführen des Einsatzes (2) in das aufnehmende Element (1) zusammenwirkt, und die von einer zylindrische Oberfläche gebildet ist, welche von einem Kreisabschnitt erzeugt wird, dessen Durchmesser dem Durchmesser des Flanschs (6) entspricht, und der senkrecht zur Achse des Ringes ist und parallel zu sich selbst entlang einer relativ zur Achse des Ringes geneigten Mantellinie (5c) bewegt wird.

## Claims

1. A quick connector comprising a female part (1) having a bore (8, 11), a male part (2) having an outer collar (6) suitable for being inserted in the bore, and a locking ring (3) mounted to slide radially in a housing (10) of the female part, which housing subdivides the bore into an inlet section (8) and a main section (11), the ring (3) being movable between a first position in which it is eccentric relative to the bore and a second position in which it is substantially coaxial with said bore, said ring being integral with a resilient member in the form of at least one tongue (12, 13) co-operating with the housing (10) to urge the ring (3) into its first position, the connector being **characterized in that** the ring (3) includes a thrust platen (9) adjacent to the inlet section (8) of the bore and projecting beside the tongue (12, 13), at least the free end portion of the tongue being of a width (L) that is less than the thickness (E) of the ring (3) minus the thickness (e) of the platen (9) measured in the same axial direction.

2. A connector according to claim 1, **characterized in that** the ring (3) has two tongues (12, 13) disposed symmetrically about a radial midplane, and **in that** the platen (9) has back reinforcement (14) between the two ends (12a, 13a) of the tongues (12, 13).

3. A connector according to claim 2, **characterized in that** the radial height (h) along the mid-axis of the portion of the platen (9) that projects relative to the ring is substantially equal to the thickness of the ends (12a, 13a) of the tongues (12, 13).

4. A connector according to claim 1, **characterized in that**, to displace the ring from its second position towards its first position when the collar (6) passes through, the ring (3) possesses a ramp (5) co-operating with the collar (6) during insertion of the endpiece (2) into the female part (1), the ramp being formed by a cylindrical surface generated by a portion of a circle of diameter equal to the diameter of the collar (6), perpendicular to the axis of the ring, and displaced parallel to itself along a generator line (5c) that slopes relative to the axis of the ring.
